# EUROPEAN PATENT APPLICATION

(11) **EP 4 420 981 A1**
(43) Date of publication of application: **28.08.2024**
(21) Application number: 22883177.2
(22) Date of filing: 27.07.2022
(51) Int. Cl.: B64D 11/02, E03D 5/00, H01H 35/00

(54) **FLUSH SWITCH FOR AIRCRAFT LAVATORY UNIT**

(30) Priority: 21.10.2021 JP 2021172518
(71) Applicant: The Yokohama Rubber Co., Ltd., Hiratsuka-shi, Kanagawa 254-8601 (JP)
(72) Inventor: NAKAO, Kazushi, Hiratsuka-shi, Kanagawa 254-8601 (JP)
(74) Representative: Dilg, Haeusler, Schindelmann Patentanwaltsgesellschaft mbH
(86) International application number: PCT/JP2022/028879
(87) International publication number: WO 2023/067865

(57) **Abstract**

Provided is a flush switch for an aircraft lavatory unit which is advantageous in reducing the number of components of the aircraft lavatory unit provided with two types of flush switches, improving assembly work efficiency, and reducing the weight of the aircraft lavatory unit. A flush switch (28) includes a first flush switch (32) of a contact type configured to be actuated by a push button (40) and a second flush switch (34) of a non-contact type including a human body sensor. The first flush switch (32) and the second flush switch (34) are attached to a single base member (30) and covered with a single cover (36). Since the second flush switch (34) of a non-contact type can be used, it is advantageous in preventing infectious diseases, and even when the second flush switch (34) of a non-contact type fails, using the first flush switch (32) of a contact type advantageously ensures convenience of users.

## Description

### Technical Field

The present invention relates to a flush switch for an aircraft lavatory unit.

### Background Art

A flush-valve toilet is often installed in a lavatory of a public facility, a train, an aircraft, or the like which is often used continuously by a large number of unspecified people.

The flush-valve toilet directly connects a toilet to a water supply pipe (water pipe) via a flush valve, the flush valve is opened by a user who operates a flush switch provided at a wall surface or the like of the lavatory, and flush water is flowed into the toilet.

In the related art, known flush switches include a contact type flush switch (see Patent Document 1) actuated by a push button for pushing operation of a user's finger and a non-contact type flush switch (see Patent Document 2) using a human body sensor for detecting part (finger) of a user's body in a non-contact manner.

### Citation List

### Patent Literature

Patent Document 1: JP 2018-127848 A
Patent Document 2: JP H09-0221806 A

### Summary of Invention

### Technical Problem

For an aircraft lavatory unit, the former contact type flush switch is typically used, but adopting the latter non-contact type flush switch has recently been awaited from the viewpoint of prevention of infectious diseases.

However, when a non-contact type flush switch is adopted, a flushing function of a toilet may be impaired if the non-contact type flush switch fails.

Then, it is conceivable that providing two types of flush switches, a non-contact type flush switch and a contact type flush switch at a wall surface of a lavatory allows, even when the non-contact type flush switch fails, the flushing function of a toilet to be ensured by operating the contact type flush switch.

Unfortunately, when the two types of flush switches are provided at different locations on the wall surface of the lavatory of the aircraft lavatory unit, the number of components of the aircraft lavatory unit increases, the work efficiency of assembling the flush switches decreases, and it is disadvantageous in reducing the weight of the aircraft lavatory unit.

The present invention has been made in view of the above-described circumstances, and an object of the present invention is to provide a flush switch for an aircraft lavatory unit which is advantageous in reducing the number of components of the aircraft lavatory unit including two types of flush switches, improving assembly work efficiency, and reducing the weight of the aircraft lavatory unit.

### Solution to Problem

To achieve the above object, an embodiment of the present invention is a flush switch provided at a wall portion of a lavatory of an aircraft lavatory unit. The flush switch includes a first flush switch of a contact type configured to be actuated by a push button and a second flush switch of a non-contact type including a human body sensor. The first flush switch and the second flush switch are attached to a single base member and covered with a single cover.

### Advantageous Effects of Invention

According to an embodiment of the present invention, the flush switch includes the first flush switch of a contact type configured to be actuated by the push button and the second flush switch of a non-contact type including the human body sensor which are attached to the single base member and covered with the single cover.

Therefore, since the second flush switch of a non-contact type can be used, it is of course advantageous in preventing infectious diseases, and even when the second flush switch of a non-contact type fails, a situation in which the flushing function of the aircraft lavatory unit is impaired can be avoided by using the first flush switch of a contact type, which is advantageous in ensuring convenience for users.

In addition, it is advantageous in reducing the number of components of the aircraft lavatory unit, improving the assembly work efficiency, and reducing the weight of the aircraft lavatory unit as compared with the case where the first flush switch of a contact type and the second flush switch of a non-contact type are provided at different locations.

### Brief Description of Drawings

FIG. 1 is a perspective view of an aircraft lavatory unit to which a flush switch according to an embodiment is applied.
FIG. 2 is a perspective view of the flush switch according to an embodiment.
FIG. 3 is a front view of the flush switch according to an embodiment.
FIG. 4 is a cross-sectional view taken along line A-A in FIG. 1.
FIG. 5 is a rear view of the flush switch according to an embodiment and illustrates a state with a base member omitted.
FIG. 6 is a rear view of the flush switch according to an embodiment and illustrates a back surface of the base member.
FIG. 7 is a perspective view of the flush switch from which a cover and a bracket are removed.
FIG. 8 is a front view of FIG. 7.
In FIG. 9, (A) is a view in the direction of arrow A in FIG. 8, (B) is a view in the direction of arrow B in FIG. 8, and (C) is a view in the direction of arrow C in FIG. 8.
FIG. 10 is a perspective view of the flush switch from which the cover is removed.
FIG. 11 is a front view of FIG. 10.
In FIG. 12, (A) is a view in the direction of arrow A in FIG. 10, (B) is a view in the direction of arrow B in FIG. 8, and (C) is a view in the direction of arrow C in FIG. 8.
FIG. 13 is a perspective view of a push button.
In FIG. 14, (A) is a front view of the push button, (B) is a view in the direction of arrow B in (A), (C) is a view in the direction of arrow C in (A), (D) is a view in the direction of arrow D in (C), (E) is a view in the direction of arrow E in (A), and (F) is a view in the direction of arrow F in (A).
FIG. 15 is a perspective view of the bracket.
In FIG. 16, (A) is a front view of the bracket, (B) is a view in the direction of arrow B in (A), (C) is a view in the direction of arrow C in (A), (D) is a view in the direction of arrow D in (C), (E) is a view in the direction of arrow E in (A), and (F) is a view in the direction of arrow F in (A).
FIG. 17 is a perspective view of the cover.
FIG. 18 is a front view of the cover.
FIG. 19 is a rear view of the cover.
FIG. 20 is a cross-sectional view taken along line A-A in FIG. 19.

### Description of Embodiments

### First Embodiment

Next, the present embodiment will be described with reference to the drawings.

First, an aircraft lavatory unit to which a flush switch according to an embodiment of the present invention is applied will be described.

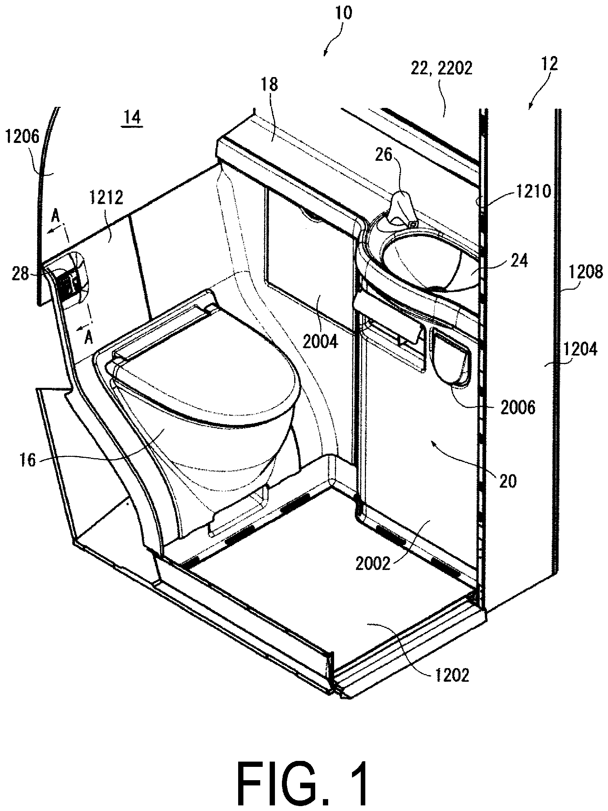

As illustrated in FIG. 1, an aircraft lavatory unit 10 includes a structural frame 12, and the inside of the structural frame 12 serves as a lavatory 14.

The structural frame 12 includes a bottom wall 1202, a front wall 1204 standing from the bottom wall 1202, a rear wall 1206 facing the front wall 1204, and a pair of side walls 1208 connecting both sides of the rear wall 1206 and both sides of the front wall 1204.

The front wall 1204 is provided with an entrance 1210 opened and closed by a door, an inner wall 1212 is provided in front of the rear wall 1206, and a toilet 16 is provided via the inner wall 1212 on the bottom wall 1202.

In FIG. 1, one of the pair of side walls 1208 and the door to open and close the entrance 1210 are omitted.

A counter table 18 is provided in the middle of the side wall 1208 in the height direction thereof. Below the counter table 18 is a lower storage portion 20 for storing a trash can device (not illustrated) with a fire extinguishing function, equipment for the lavatory 14, and the like. The lower storage portion 20 can be opened and closed by a plurality of doors 2002 and 2004. In FIG. 1, the reference sign 2006 denotes a trash feeding port.

The upside of the counter table 18 serves as an upper storage portion 22 for storing equipment for the lavatory 14, such as tissues. The upper storage portion 22 is opened and closed by a mirrored door 2202.

A bowl portion 24 is provided at a portion of the counter table 18 close to the front wall 1204, and an automatic faucet 26 is provided at a portion of the counter table 18 around the bowl portion 24.

In the present embodiment, a flush switch 28 according to an embodiment of the present invention is provided at a portion of the inner wall 1212 located above the toilet 16 so that a user can operate the flush switch 28 while sitting on a toilet seat.

The flush switch 28 is operated by a user to actuate a flush valve (solenoid valve; not illustrated) connected to a water supply pipe (not illustrated) to flush water into the toilet 16.

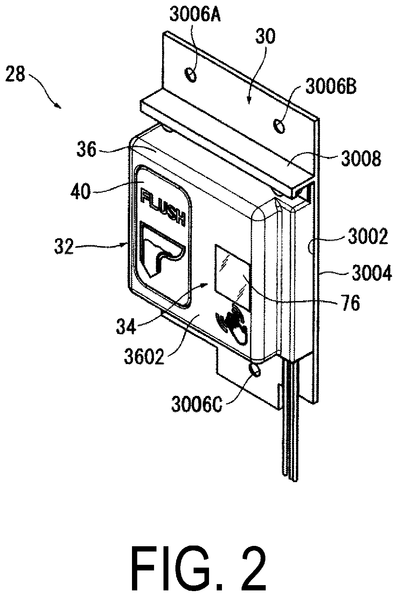

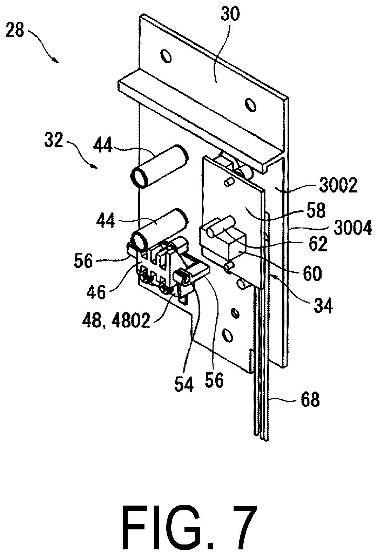

As illustrated in FIGS. 2 and 7, the flush switch 28 includes a single base member 30, a first flush switch 32 of a contact type, a second flush switch 34 of a non-contact type, and a single cover 36.

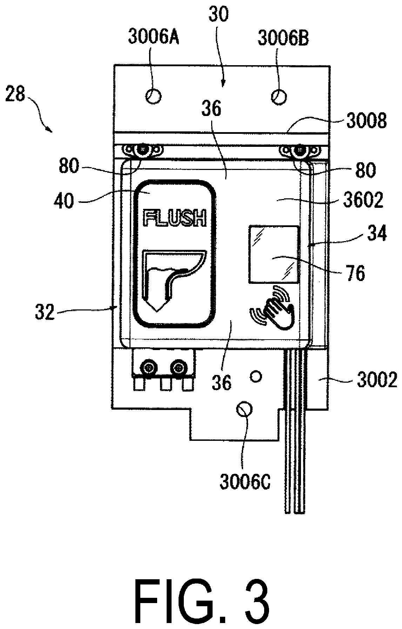

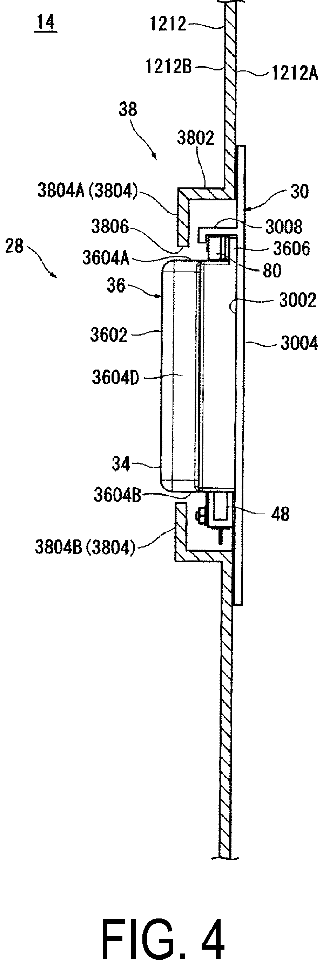

As illustrated in FIGS. 3, 4, and 6, the base member 30 is made of metal, has a rectangular shape in a plan view, has a uniform thickness, and is attached to the inner wall 1212 of the lavatory 14 as illustrated in FIG. 4.

Hereinafter, a long side direction of the base member 30 is referred to as a longitudinal direction of the base member 30, a short side direction of the base member 30 is referred to as a width direction of the base member 30, and the base member 30 has a length along the longitudinal direction and a width along the width direction.

In a state in which the base member 30 is attached to the inner wall 1212 of the lavatory 14, the longitudinal direction of the base member 30 extends in the vertical direction, and the width direction of the base member 30 extends in the horizontal direction.

One surface of the base member 30 is a front surface 3002 to which the first flush switch 32, the second flush switch 34, and the cover 36 are attached, and the other surface thereof is a back surface 3004.

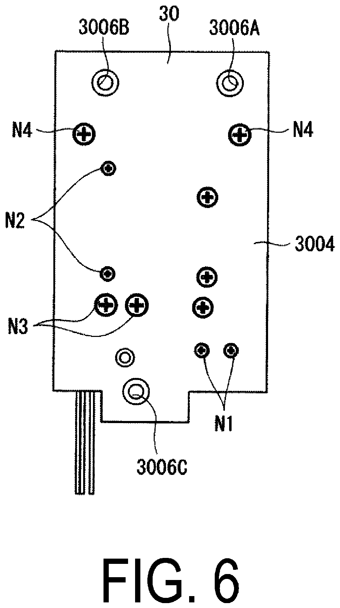

As illustrated in FIGS. 3 and 6, two base member mounting screw insertion holes 3006A and 3006B are provided at an interval in the width direction at an upper portion of the base member 30, and one base member mounting screw insertion hole 3006C is provided at the center in the width direction of a lower portion of the base member 30.

On the front surface 3002 of the base member 30, an upper lateral wall 3008 is raised below the two base member mounting screw insertion holes 3006A and 3006B of the upper portion so as to extend over the entire length of the base member 30 in the width direction.

As illustrated in FIG. 4, at the portion of the inner wall 1212 at which the flush switch 28 is provided, a bulging portion 38 that bulges toward the lavatory 14 and has a rectangular frame shape in a plan view is formed.

The bulging portion 38 includes a raised wall 3802 raised in a rectangular frame shape from the inner wall 1212 and an upper wall 3804 which is connected to the entire periphery of the upper end of the raised wall 3802 and extends in a rectangular frame shape, and the inside of the upper wall 3804 serves as a switch arrangement opening 3806.

In the present embodiment, as illustrated in FIG. 4, the base member 30 is attached to the inner wall 1212 by screwing screws (not illustrated) inserted through the base member mounting screw insertion holes 3006A, 3006B, and 3006C (see FIGS. 2 and 3) into screw holes (not illustrated) provided in the inner wall 1212 in a state in which the longitudinal direction is aligned parallel to the vertical direction, the upper and lower portions of the base member 30 are placed on an outer surface 1212A of the inner wall 1212, and the middle portion of the base member 30 is opposed to the upper wall 3804 and the switch arrangement opening 3806.

As illustrated in FIGS. 2 and 3, the first flush switch 32 and the second flush switch 34 are arranged side by side in the horizontal direction on the base member 30.

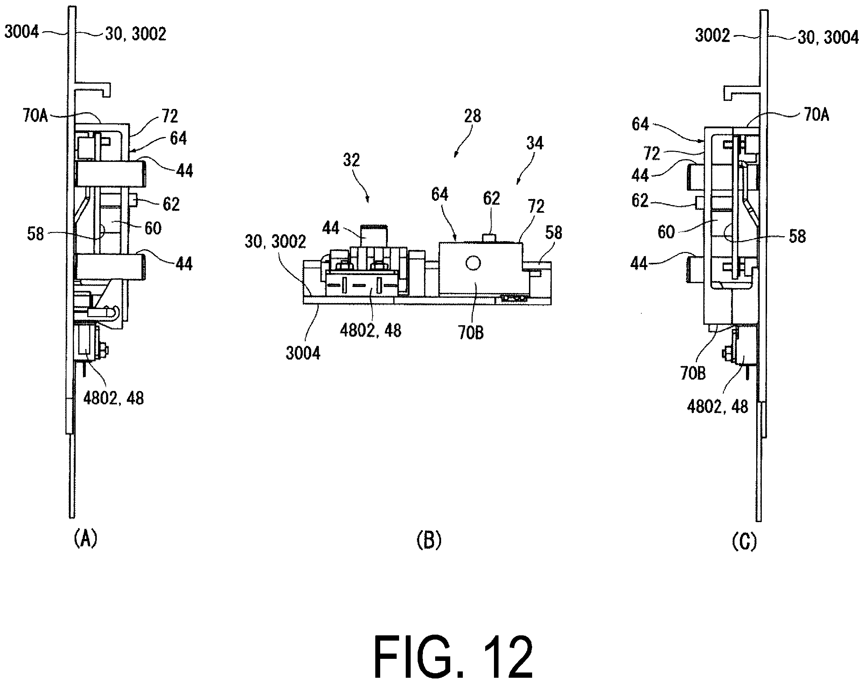

That is, as illustrated in FIG. 3 and FIGS. 10 to 12, the first flush switch 32 is provided around a half portion of the front surface 3002 of the base member 30 in the horizontal direction, and the second flush switch 34 is provided around a half portion of the rest of the front surface 3002 of the base member 30.

The first flush switch 32 is a contact type flush switch actuated by a push button 40 (see FIG. 2), and the first flush switch 32 includes a pair of guide shafts 42, coil springs 44, a lever 46, a microswitch 48, and the like as illustrated in FIGS. 7 to 9.

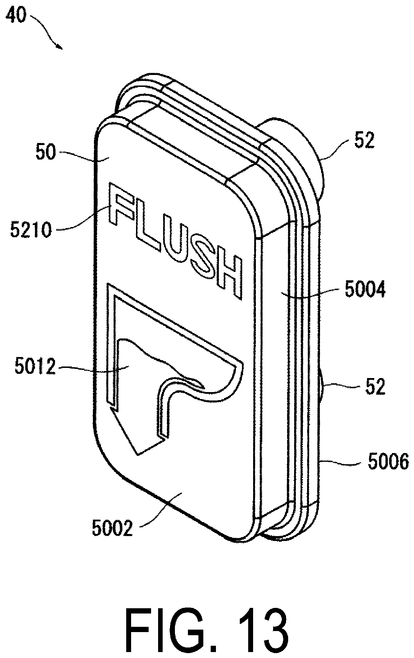

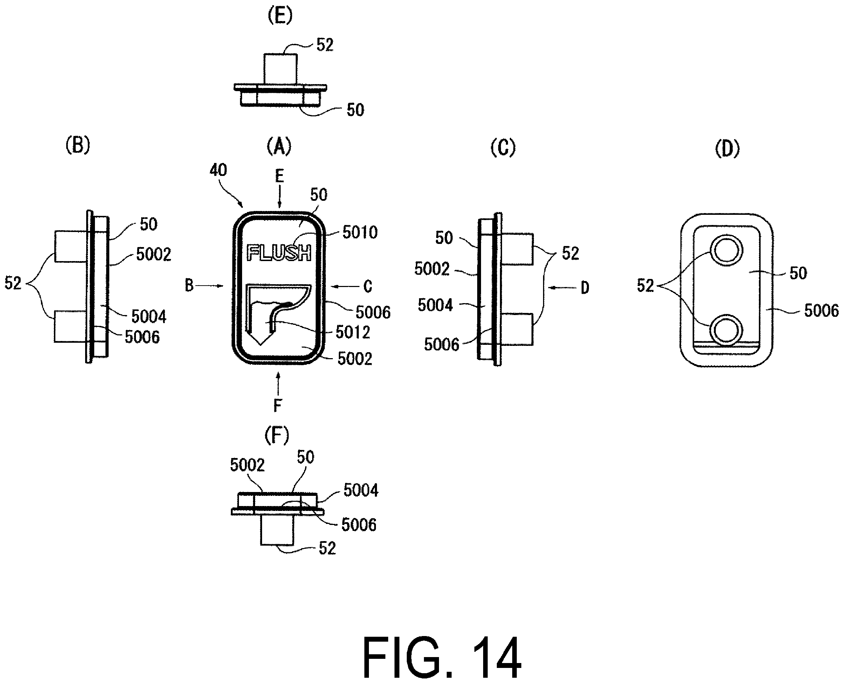

As illustrated in FIGS. 13 and 14, the push button 40 is made of synthetic resin and includes a button body 50 to be pressed by a user of the lavatory 14 and a pair of coil spring housing portions 52.

The button body 50 includes a body wall portion 5002 having a vertically-elongated rectangular shape, a peripheral wall portion 5004 standing from the entire periphery of the body wall portion 5002, and a flange portion 5006 projecting from the entire periphery of the end of the peripheral wall portion 5004 to the outside of the peripheral wall portion 5004.

On a front surface of the body wall portion 5002, letters 5010 indicating the flush switch 28 and a display 5012 indicating that water will flush the toilet 16 are formed.

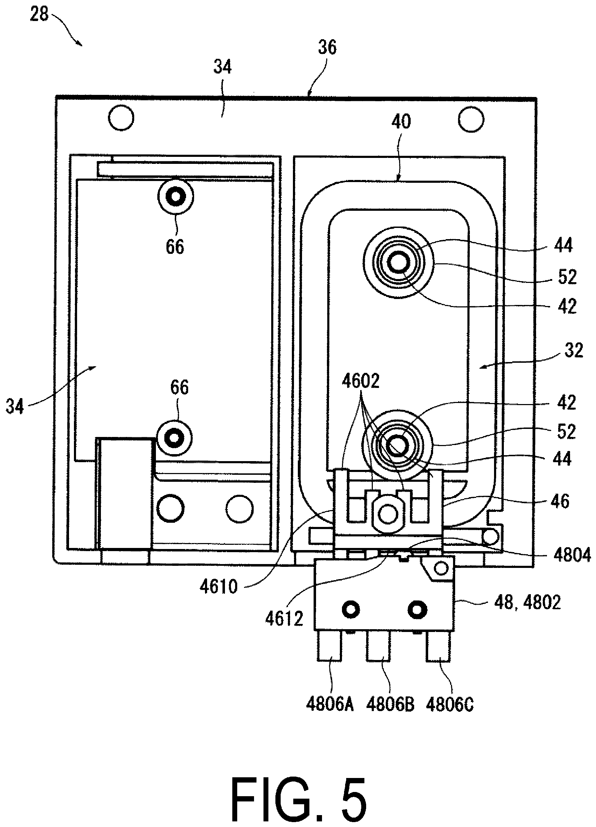

The pair of coil spring housing portions 52 are portions in which part of the coil springs 44 and tip portions of the guide shafts 42 illustrated in FIG. 5 are housed, and are formed by a pair of cylindrical walls disposed projecting at a distance in the longitudinal direction of a back surface of the body wall portion 5002 at the center of the back surface in the width direction.

FIGS. 7, 9, 10, and 12 illustrate the coil springs 44 in a free-length state.

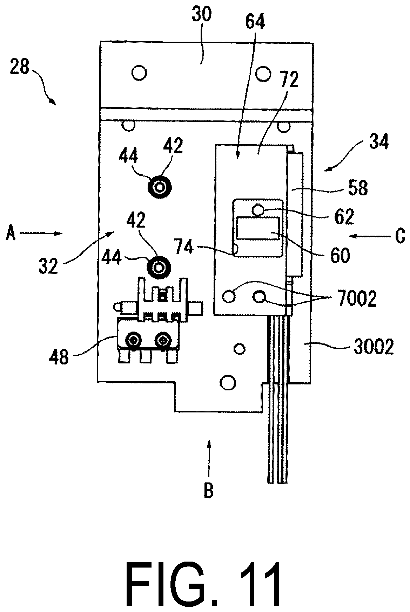

As illustrated in FIG. 11, the pair of guide shafts 42 is disposed projecting from the front surface 3002 of a half portion (left half portion) of the base member 30 in the horizontal direction, and is configured to be inserted into the coil springs 44 and housed in the coil spring housing portions 52 (see FIG. 5) of the push button 40.

As illustrated in FIGS. 2 and 3, the push button 40 is disposed at the cover 36 so as to be linearly movable between an initial position and a push-in position in a direction in which a front wall 3602 of the cover 36 to described below and the base member 30 face each other.

The initial position of the push button 40 is determined by the flange portion 5006 of the push button 40 in contact with an edge portion of a push button opening 3610 of the cover 36 described below.

As illustrated in FIG. 5 and FIGS. 7 to 9, the push button 40 is always biased to the initial position by the coil springs 44 housed in the pair of coil spring housing portions 52.

In this state, a portion of the coil springs 44 in the longitudinal direction is housed in the coil spring housing portions 52, both ends of the coil springs 44 are in contact with the bottom walls of the coil spring housing portions 52 and the front surface 3002 of the base member 30, the tip portions of the guide shafts 42 are located inside the coil spring housing portions 52, and the tips of the guide shafts 42 are located at a position away from the bottom walls of the coil spring housing portions 52.

The push-in position of the push button 40 is determined by, for example, the tips of the coil spring housing portions 52 in contact with the front surface 3002 of the base member 30.

In this state, the coil springs 44 are housed in the coil spring housing portions 52 over the entire lengths thereof in the longitudinal direction, both ends of the coil springs 44 are in contact with the bottom walls of the coil spring housing portions 52 and the front surface 3002 of the base member 30, the entire length portion of the guide shafts 42 are located inside the coil spring housing portions 52, and the tips of the guide shafts 42 are located at a position away from the bottom walls of the coil spring housing portions 52 even in this push-in position of the push button 40.

As illustrated in FIGS. 7 to 9, the lever 46 is swung by linear movement of the push button 40 from the initial position to the push-in position, and the lever 46 swung operates the microswitch 48 by pushing a plunger 4804 (see FIG. 5) of the microswitch 48 described below from a projected position to a retracted position.

As illustrated in FIGS. 7, 8, and 9(C), the lever 46 is supported so as to be swingable about a support shaft 54, and the support shaft 54 is supported, at both ends in the longitudinal direction thereof, by the base member 30 via leg portions 56 and extends in the width direction of the base member 30.

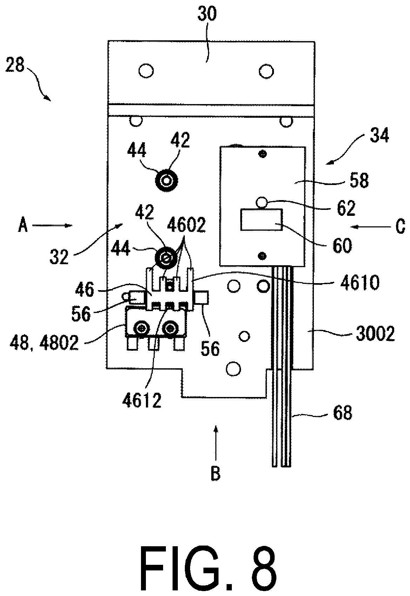

As illustrated in FIGS. 5 and 8, the lever 46 includes four triangular plate portions 4602 which integrally swing about the support shaft 54, and the four triangular plate portions 4602 include a first portion 4610 located on the push button 40 side of a portion supported by the support shaft 54 and a second portion 4612 located on the microswitch 48 side of the portion supported by the support shaft 54.

In a state in which the push button 40 is located at the initial position, the lever 46 is also located at the initial position.

A helical coil spring (not illustrated) that biases the lever 46 to the initial position is provided across the lever 46 and the leg portions 56, and a stopper (not illustrated) that comes in contact with the lever 46 to position the lever 46 at the initial position is provided at the leg portions 56.

At the initial position of the lever 46, the first portion 4610 is separated from the flange portion 5006 of the push button 40, and the second portion 4612 is in a position contactable with the tip of the plunger 4804 (see FIG. 5) projected to the projected position.

On the other hand, as the push button 40 is pushed from the initial position to the push-in position, the lever 46 moves from the initial position to a swing position.

At the swing position of the lever 46, the first portion 4610 is swung by the flange portion 5006, and the second portion 4612 comes into contact with the tip of the plunger 4804 and pushes the tip of the plunger 4804 to push the plunger 4804 from the projected position to the retracted position.

Thus, the first flush switch 32 is actuated by the push button 40.

In this state, when the push button 40 is released, the push button 40 returns from the push-in position to the initial position by the biasing force of the coil springs 44, whereby the lever 46 returns to the initial position.

As illustrated in FIG. 5, the microswitch 48 includes a switch body 4802, the plunger 4804, and three connection terminals 4806A, 4806B, and 4806C. In the present embodiment, a waterproof microswitch is used.

As illustrated in FIG. 5 and FIGS. 7 to 9, the switch body 4802 has a flat rectangular parallelepiped shape, and is disposed at the front surface 3002 of the base member 30 in proximity to the second portion 4612 of the lever 46 in a state in which the long sides of the switch body 4802 are aligned parallel to the width direction of the base member 30. More specifically, the switch body 4802 is attached to the front surface 3002 of the base member 30 via screws N1 (see FIG. 6) inserted through screw insertion holes (not illustrated) from the back surface 3004.

The plunger 4804 is provided so as to be projectable from one long side of the switch body 4802.

The plunger 4804 is biased to the projected position and is pushed from the projected position to the retracted position by the second portion 4612 of the lever 46, thus actuating the microswitch 48.

As illustrated in FIG. 5, the three connection terminals 4806A, 4806B, and 4806C are configured by a common terminal 4806A, a normally-open terminal 4806B, and a normally-closed terminal 4806C.

When the plunger 4804 is pushed to the retracted position, the common terminal 4806A and the normally-open terminal 4806B are turned on (closed), and the common terminal 4806A and the normally-closed terminal 4806C are turned off (opened).

In the present embodiment, the common terminal 4806A and the normally-open terminal 4806B are connected to a control unit (not illustrated) via a cable (not illustrated).

Upon detecting that the common terminal 4806A and the normally-open terminal 4806B are turned on, the control unit opens the solenoid valve to flush water into the toilet 16.

As illustrated in FIG. 3 and FIGS. 10 to 12, the second flush switch 34 is a non-contact type flush switch and is provided at the remaining half portion in the width direction of the base member 30 in the horizontal direction.

The second flush switch 34 includes a printed circuit board 58, an infrared sensor 60, an indicator LED 62, and a bracket 64.

As illustrated in FIGS. 7 and 8, the printed circuit board 58 has a rectangular shape having long sides along the longitudinal direction of the base member 30.

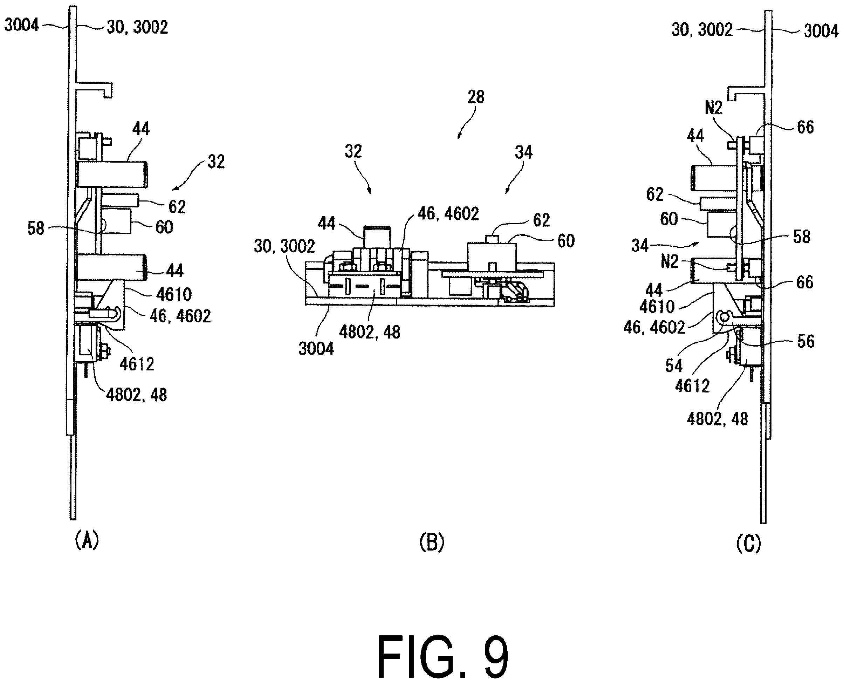

As illustrated in FIG. 9(C), both ends of the printed circuit board 58 in the longitudinal direction are attached in parallel to the base member 30 at a section separated from the front surface 3002 of the base member 30 via a pair of spacers 66 and screws N2 (see FIG. 6), and the printed circuit board 58 is provided around the remaining half portion of the base member 30.

As illustrated in FIGS. 7 and 8, the infrared sensor 60 is attached below the center of the printed circuit board 58.

The infrared sensor 60 is a human body sensor that detects the presence of a finger of a human body by emitting detection light of an infrared ray in a direction opposite to the base member 30 and detecting reflected light of the detection light emitted to the finger of the human body.

Upon detecting a finger of a human body, the infrared sensor 60 generates a detection signal and sends the detection signal to the control unit described above via a cable 68.

Upon receiving the detection signal, the control unit opens the solenoid valve to flush water into the toilet 16.

Separating the cable connecting the microswitch 48 and the control unit from the cable 68 connecting the infrared sensor 60 and the control unit allows the microswitch 48 and the infrared sensor 60 to be replaced separately and is advantageous in improving maintainability.

As illustrated in FIGS. 7 and 8, the indicator LED 62 is attached to the printed circuit board 58 above and adjacent to the infrared sensor 60.

The indicator LED 62 is connected to the control unit via the cable 68.

The indicator LED 62 notifies a user of the lavatory 14 of a detection state of a human body by the infrared sensor 60.

In the present embodiment, the control unit causes the indicator LED 62 to emit light with low brightness when no human body is detected by the infrared sensor 60, and causes the indicator LED 62 to emit light with high brightness when a human body is detected by the infrared sensor 60.

An emission color of the indicator LED 62 is, for example, blue, but the emission color is not limited thereto.

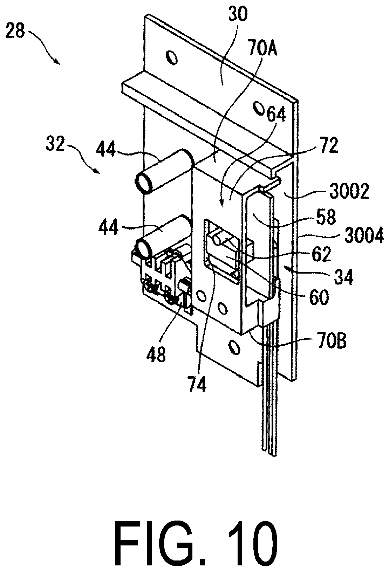

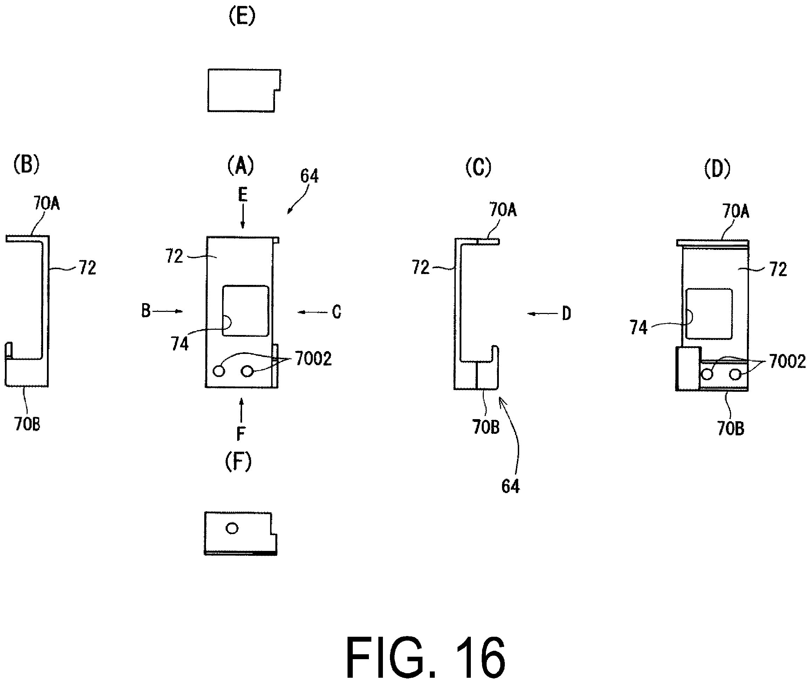

As illustrated in FIGS. 10 to 12 and FIGS. 15 to 16, the bracket 64 is provided around the half portion of the base member 30 to be provided with the second flush switch 34.

The bracket 64 includes a pair of leg portions 70A and 70B and a body plate portion 72.

The body plate portion 72 is supported by the pair of leg portions 70A and 70B, faces the base member 30, and covers the printed circuit board 58.

The body plate portion 72 has a rectangular shape in a plan view, and is formed with an opening 74 having a rectangular shape at a position facing the infrared sensor 60 and the indicator LED 62.

A section around the opening 74 of the body plate portion 72 serves as a section that comes into contact with a periphery of a transparent plate 76 attached to the cover 36 described below.

One of the pair of leg portions 70A and 70B is a first leg portion 70A, and the other is a second leg portion 70B.

As illustrated in FIGS. 10 to 12, the first leg portion 70A is disposed projecting from one end of the body plate portion 72 in the longitudinal direction toward the base member 30, and the tip of the first leg portion 70A is provided so as to capable of coming into contact with the front surface 3002 of the base member 30.

The second leg portion 70B is disposed projecting from the other end of the body plate portion 72 in the longitudinal direction toward the base member 30, and the tip of the second leg portion 70B is in contact with the front surface 3002 of the base member 30.

As illustrated in FIG. 11, the second leg portion 70B is formed with a pair of screw holes 7002 which penetrate through the second leg portion 70B in the extension direction thereof, and screws N3 (see FIG. 6) inserted through screw insertion holes (not illustrated) formed in the base member 30 corresponding to the pair of screw holes 7002 are screwed into the respective screw holes 7002, whereby the bracket 64 is attached to the base member 30. In this state, the end of the first leg portion 70A is in contact with the front surface 3002 of the base member 30.

As illustrated in FIGS. 2 to 4, the cover 36 covers the first flush switch 32 and the second flush switch 34.

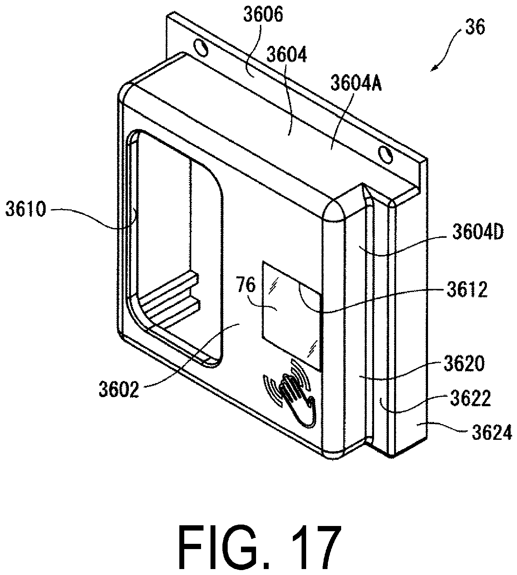

As illustrated in FIGS. 17 to 19, the cover 36 includes a front wall 3602, a peripheral wall 3604, a flange wall 3606, a dividing wall 3608, and the transparent plate 76, and has a width and a length corresponding to the width and the length of the base member 30.

The front wall 3602 extends substantially on a vertical plane in a use state of the cover 36, and the front wall 3602 is located at a section facing the base member 30.

At the front wall 3602, the push button opening 3610 and a sensor opening 3612 are provided side by side in the width direction of the front wall 3602.

The push button opening 3610 exposes the body wall portion 5002 of the push button 40 and enables the push button 40 to be pushed.

The push button opening 3610 is formed with a contour slightly larger than the contour of the push button 40 and is located at a position at which the surface of the body wall portion 5002 slightly projects from the front wall 3602 at the initial position of the push button 40 to allow the push button 40 to be easily pushed.

The sensor opening 3612 is provided so as to correspond to the infrared sensor 60 and the indicator LED 62 and has a rectangular shape slightly smaller than the opening 74 of the bracket 64.

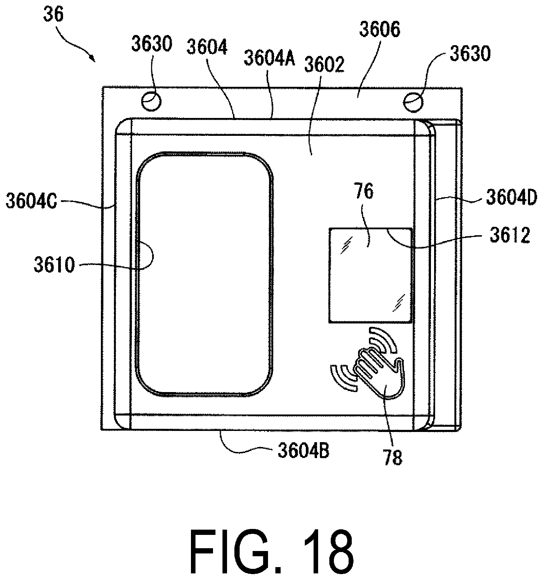

In FIG. 18, the reference sign 78 denotes a signage of a hand formed at the front wall 3602 near the sensor opening 3612 to indicate that the second flush switch 34 is a non-contact sensor, that is, the flush switch 28 to be actuated by putting a hand over the flush switch 28.

As illustrated in FIGS. 17 and 18, the peripheral wall 3604 projects from the periphery of the front wall 3602 toward the base member 30, and the projecting end of the peripheral wall 3604 is in contact with the front surface 3002 of the base member 30.

More specifically, as illustrated in FIG. 18, the peripheral wall 3604 includes an upper wall 3604A, a lower wall 3604B, and a pair of side walls 3604C and 3604D.

The upper wall 3604A is disposed projecting from the upper end of the front wall 3602 toward the base member 30, the lower wall 3604B is disposed projecting from the lower end of the front wall 3602 toward the base member 30, and the pair of side walls 3604C and 3604D are disposed projecting from the both sides of the front wall 3602 toward the base member 30.

As illustrated in FIG. 17, of the pair of side walls 3604C and 3604D, the side wall 3604D on the second flush switch 34 side includes a first wall portion 3620 projecting from the front wall 3602, an intermediate wall 3622 projecting in the width direction of the front wall 3602 from an end of the first wall portion 3620, and a second wall portion 3624 projecting from an end of the intermediate wall 3622 toward the base member 30 and being in contact with the base member 30.

The second wall portion 3624 extends in the length direction of the front wall 3602, and the second wall portion 3624 is in contact with the base member 30 over the entire length thereof.

As illustrated in FIGS. 17 and 18, the flange wall 3606 extends across an end of the upper wall 3604A and an end of the side wall 3604C on the first flush switch 32 side out of the pair of side walls 3604C and 3604D and projects from these ends toward the outside of the cover 36, and the flange wall 3606 is in contact with the front surface 3002 of the base member 30 over the entire length thereof.

Thus, the upper wall 3604A and the side wall 3604C on the first flush switch 32 side are in contact with the base member 30 via the flange wall 3606.

The lower wall 3604B is in contact with the base member 30 over the entire length thereof.

A screw insertion hole 3630 and a female thread member 80 (see FIG. 3) are provided at respective locations close to both ends in the extension direction of the flange wall 3606 in a portion of the flange wall 3606 provided at the end of the upper wall 3604A.

Thus, as illustrated in FIG. 6, the cover 36 is attached to the base member 30 by screwing screws N4 inserted through screw insertion holes (not illustrated) provided at locations of the base member 30 corresponding to the screw insertion holes 3630 into the female thread members 80.

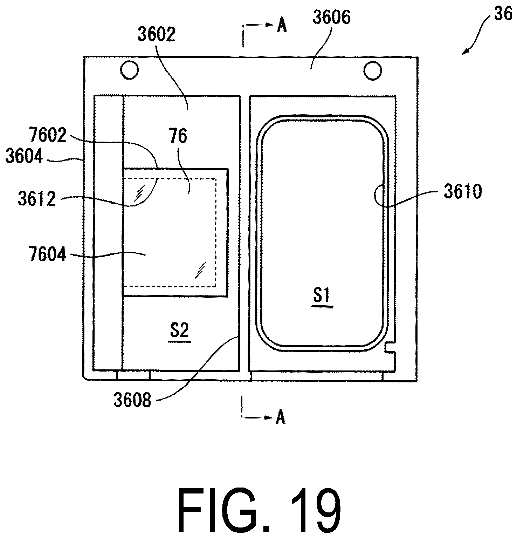

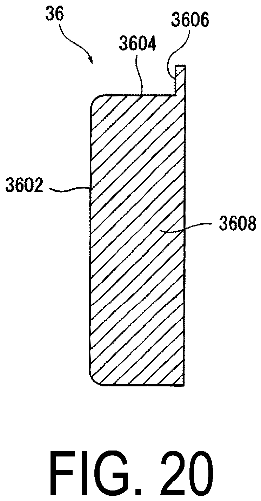

As illustrated in FIGS. 19 and 20, the dividing wall 3608 is disposed projecting from the inner surface of the front wall 3602.

The dividing wall 3608 extends in a direction orthogonal to a direction in which the first flush switch 32 and the second flush switch 34 are arranged, and divides the inside of the cover 36 into a first space S1 in which the first flush switch 32 is housed and a second space S2 in which the second flush switch 34 is housed, and an end portion of the dividing wall 3608 located opposite to the front wall 3602 is in contact with the base member 30 over the entire length thereof.

In other words, the dividing wall 3608 extends between the peripheral wall 3604 (between the upper wall 3604A and the lower wall 3604B) facing each other, and the end portion of the dividing wall 3608 is in contact with the base member 30 over the entire length thereof.

That is, the first space S1 is a space surrounded by a half portion of the front wall 3602, a half portion of the upper wall 3604A, a half portion of the lower wall 3604B, the side wall 3604C on the first flush switch 32 side, the dividing wall 3608, and the front surface 3002 of the base member 30.

The second space S2 is a space surrounded by the remaining half portion of the front wall 3602, the remaining half portion of the upper wall 3604A, the remaining half portion of the lower wall 3604B, the side wall 3604D on the second flush switch 34 side, the dividing wall 3608, and the front surface 3002 of the base member 30.

The dividing wall 3608 also serves as a rib for reinforcing the front wall 3602 of the cover 36.

As illustrated in FIGS. 17 to 19, the transparent plate 76 is formed of a transparent synthetic resin material that transmits infrared rays.

The transparent plate 76 has a rectangular plate shape having a contour larger than the sensor opening 3612, and is detachably attached to the sensor opening 3612 from the inner surface of the front wall 3602 of the cover 36.

Specifically, as illustrated in FIG. 19, the transparent plate 76 includes a base plate portion 7602 having a substantially square plate shape and a bulging portion 7604 that bulges from the base plate portion 7602 and is fitted into the sensor opening 3612.

In a state in which the bulging portion 7604 is fitted in the sensor opening 3612, an end surface of the bulging portion 7604 and the front surface of the front wall 3602 are located on the same plane.

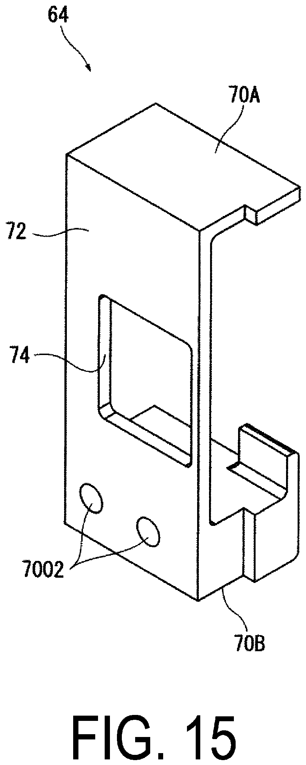

A portion around the opening 74 (see FIG. 15) of the body plate portion 72 of the bracket 64 is in contact with a portion around the transparent plate 76 located outside the sensor opening 3612 of the cover 36, more specifically, a portion of the base plate portion 7602 located outside the bulging portion 7604.

In the present embodiment, in a state in which the transparent plate 76 is attached to the sensor opening 3612 of the cover 36, the inner surface of the base plate portion 7602 is located on the same plane as the inner surface of the front wall 3602.

As illustrated in FIG. 4, in the flush switch 28, as described above, the upper and lower portions of the base member 30 are brought into contact with the outer surface 1212A of the inner wall 1212 and fastened by screws (not illustrated) from the outer surface 1212A side, whereby the entire region of the front wall 3602 of the cover 36 is exposed to the interior of the lavatory 14 through the switch arrangement opening 3806 of the bulging portion 38 of the inner wall 1212.

Thus, the operation of the push button 40 of the first flush switch 32 and the detection of a finger by the infrared sensor 60 of the second flush switch 34 can be reliably performed.

As illustrated in FIGS. 1 and 4, the periphery of the front wall 3602 of the cover 36 is covered by the upper wall 3804 extending in a rectangular frame shape.

In FIG. 4, the reference sign 3804A denotes an upper portion of the upper wall 3804 extending in a rectangular frame shape. The upper portion 3804A covers the front side of the flange wall 3606 projecting from the end of the upper wall 3604A of the cover 36.

In addition, the reference sign 3804B denotes a lower portion of the upper wall 3804 extending in a rectangular frame shape. The lower portion 3804B covers a portion of the microswitch 48 exposed below the lower wall 3604B of the cover 36, a portion of a cable (not illustrated) drawn out from the microswitch 48, and a portion of the cable 68 drawn out from the infrared sensor 60 and the indicator LED 62.

The flange wall 3606, the female thread members 80 for mounting the flange wall 3606 to the base member 30, the portion of the microswitch 48, and the portions of the cable (not illustrated) and the cable 68 are hidden by the portions 3804A and 3804B of the bulging portion 38, whereby the aesthetic appearance of the lavatory 14 is ensured.

In the present embodiment, a case in which the flush switch 28 is mounted such that the upper portion and the lower portion of the base member 30 are brought into contact with the outer surface 1212A of the inner wall 1212 and fastened with screws from the outer surface 1212A side has been described. However, the flush switch 28 may be mounted by bringing the back surface 3004 of the base member 30 into contact with, for example, an inner surface 1212B of the inner wall 1212 of the aircraft lavatory unit 10.

In that case, preferably, the top portions of the screws N1, N2, N3, and N4 for mounting the members such as the microswitch 48, the printed circuit board 58, the bracket 64, and the cover 36 to the base member 30 do not project from the back surface 3004 of the base member 30 so that the top portions the screws N1, N2, N3, and N4 do not interfere with the inner surface 1212B of the inner wall 1212.

For this reason, counterbores are provided on the back surface 3004 side of the screw insertion holes of the base member 30 and countersunk head screws are used as the screws N1, N2, N3, and N4 for mounting the respective members so that the top portions of the screws N1, N2, N3, and N4 do not project from the back surface 3004 of the base member 30, whereby the back surface 3004 of the base member 30 can be reliably and stably brought into contact with a wall surface of the aircraft lavatory unit 10, which is advantageous in easily mounting the flush switch 28 to the wall surface.

Next, the effects of the present embodiment will be described.

According to the present embodiment, the flush switch 28 includes the first flush switch 32 of a contact type configured to be actuated by the push button 40 and the second flush switch 34 of a non-contact type including a human body sensor, and the first flush switch 32 and the second flush switch 34 are attached to the single base member 30 and covered with the single cover 36.

Therefore, since the second flush switch 34 of a non-contact type can be used, it is of course advantageous in preventing infectious diseases, and even when the second flush switch 34 of a non-contact type fails, a situation in which the flushing function of the toilet 16 of the aircraft lavatory unit 10 is impaired can be avoided by using the first flush switch 32 of a contact type, which is advantageous in ensuring convenience for users.

In addition, it is advantageous in reducing the number of components of the aircraft lavatory unit 10, improving the assembly work efficiency, and reducing the weight of the aircraft lavatory unit 10 as compared with the case where two types of flush switches, that is, the first flush switch 32 of a contact type and the second flush switch 34 of a non-contact type are provided at different locations.

In the present embodiment, the first flush switch 32 is provided around a half portion of the base member 30 in the horizontal direction, and the second flush switch 34 is provided around the remaining half portion of the base member 30, thus has a good appearance, is advantageous in improving the usability of the flush switch 28, and is advantageous in efficiently designing the layout of the components of the flush switch 28.

In the present embodiment, the cover 36 includes the front wall 3602 facing the base member 30 and being provided with the push button 40 and the peripheral wall 3604 projecting from the periphery of the front wall 3602 toward the base member 30. The dividing wall 3608 is provided at the inner surface of the front wall 3602 facing the base member 30. The dividing wall 3608 extends in a direction orthogonal to the direction in which the first flush switch 32 and the second flush switch 34 are arranged and divides the inside of the cover 36 into the first space S1 in which the first flush switch 32 is housed and the second space S2 in which the second flush switch 34 is housed. The end portion of the dividing wall 3608 located opposite to the front wall 3602 is in contact with the base member 30.

Thus, even when water or dust having entered the first space S1 from a clearance between the push button opening 3610 of the cover 36 and the push button 40 is about to enter the second space S2 via the first space S1, the water or the dust is blocked by the dividing wall 3608, thereby increasing the water resistance and the dust resistance of the second flush switch 34, which is advantageous in improving the durability of the second flush switch 34.

In particular, passengers may wash their feet in the toilet 16 in some flight routes, and in that case, increasing the water resistance of the second flush switch 34 is advantageous in ensuring the flushing function of the toilet 16.

Further, since the dividing wall 3608 also serves as a reinforcing rib, the strength and the rigidity of the cover 36 can be enhanced.

Furthermore, in the present embodiment, the dividing wall 3608 extends between the peripheral wall 3604 (between the upper wall 3604A and the lower wall 3604B) facing each other, and the end portion of the dividing wall 3608 is in contact with the base member 30 over the entire length thereof. This is advantageous in ensuring the function of the dividing wall 3608 as a reinforcing rib, and in enhancing the strength and the rigidity of the cover 36.

Thus, even when a user of the aircraft lavatory unit 10 staggers and comes into contact with the cover 36 due to severe vibration when the aircraft enters an air pocket, the cover 36 can be prevented from being damaged or deformed, and the first flush switch 32 and the second flush switch 34 can be protected, which is advantageous in ensuring the flushing function of the toilet 16 of the aircraft lavatory unit 10.

In addition, even when a user operates the first flush switch 32 or the second flush switch 34 with his/her shoe sole and thus an excessive load is applied to the cover 36, the dividing wall 3608 serves as a reinforcing rib in the same manner as described above to prevent damage or deformation of the cover 36 and protect the first flush switch 32 and the second flush switch 34, which is advantageous in ensuring the flushing function of the toilet 16 of the aircraft lavatory unit 10.

In the present embodiment, the human body sensor is the infrared sensor 60, and the second flush switch 34 includes the printed circuit board 58 attached to around a half portion of the base member 30 and configured to support the infrared sensor 60. The bracket 64 including the pair of leg portions 70A and 70B standing from sections of the base member 30 across the printed circuit board 58 in the vertical direction and the body plate portion 72 supported by the pair of leg portions 70A and 70B and configured to cover the printed circuit board 58 is provided.

The sensor opening 3612 and the opening 74 are provided in the front wall 3602 and the body plate portion 72 facing the infrared sensor 60, respectively.

The transparent plate 76 transmitting infrared rays and having a contour larger than the opening 74 of the body plate portion 72 is detachably attached to the sensor opening 3612 of the front wall 3602 from the inner surface of the front wall 3602, and a portion around the opening 74 of the body plate portion 72 is in contact with the periphery of the transparent plate 76 located outside the sensor opening 3612.

Thus, when the transparent plate 76 is damaged or deteriorated over time, only the transparent plate 76 can be easily replaced, which is advantageous in improving the maintainability of the flush switch 28.

Further, since the periphery of the opening 74 of the body plate portion 72 of the bracket 64 is in contact with the periphery of the transparent plate 76 located outside the sensor opening 3612 of the cover 36, the transparent plate 76 does not come off from the sensor opening 3612 of the cover 36 even in a case where a user of the aircraft lavatory unit 10 staggers and comes into contact with the portion of the transparent plate 76 due to severe vibration when the aircraft enters an air pocket.

Thus, it is possible to prevent the infrared sensor 60 or the printed circuit board 58 from being damaged due to coming off of the transparent plate 76, which is advantageous in ensuring the flushing function of the toilet 16 of the aircraft lavatory unit 10.

Furthermore, even when a user presses the transparent plate 76 of the cover 36 with his/her shoe sole and an excessive load is applied to the cover 36, the transparent plate 76 does not come off from the sensor opening 3612 of the cover 36 in the same way as described above, and the infrared sensor 60 or the printed circuit board 58 can be prevented from being damaged due to the fallen transparent plate 76, which is advantageous in ensuring the flushing function of the toilet 16 of the aircraft lavatory unit 10.

In the present embodiment, the first flush switch 32 includes the microswitch 48 having the plunger 4804, the push button 40 is disposed at the cover 36 so as to be linearly movable between the initial position and the push-in position in the direction in which the front wall 3602 and the base member 30 face each other, and the first flush switch 32 includes the coil springs 44 configured to bias the push button 40 to the initial position and the lever 46 swung by the linear movement of the push button 40 from the initial position to the push-in position and configured to push the plunger 4804.

Thus, for example, even in a case where an existing single contact type flush switch uses a swing type push button instead of a linear movement type push button as in the present embodiment, when the existing flush switch is replaced with the flush switch 28 including both the first and second flush switches 32 and 34, the microswitch of the existing flush switch can be diverted.

As a result, in replacing with the flush switch 28 including the first and second flush switches 32 and 34, the number of components of the flush switch 28 can be reduced, which is advantageous for cost reduction.

### Reference Signs List

10 Aircraft lavatory unit
12 Structural frame
1202 Bottom wall
1204 Front wall
1206 Rear wall
1208 Side wall
1210 Entrance
1212 Inner wall
1212A Outer surface of inner wall
1212B Inner surface of inner wall
14 Lavatory
16 Toilet
18 Counter table
20 Lower storage portion
2002, 2004 Door
2006 Trash feeding port
22 Upper storage portion
2202 Door
24 Bowl portion
26 Automatic faucet
28 Flush switch
30 Base member
3002 Front surface
3004 Back surface
3006A, 3006B, 3006C Screw insertion hole for mounting base member
3008 Upper lateral wall
32 First flush switch
34 Second flush switch
36 Cover
3602 Front wall
3604 Peripheral wall
3604A Upper wall
3604B Lower wall
3604C, 3604D Side wall
3606 Flange wall
3608 Dividing wall
3610 Push button opening
3612 Sensor opening
3620 First wall portion
3622 Intermediate wall
3624 Second wall portion
3630 Screw insertion hole
76 Transparent plate
38 Bulging portion
3802 Raised wall
3804 Upper wall
3806 Switch arrangement opening
40 Push button
42 Guide shaft
44 Coil spring
46 Lever
4602 Triangular plate portion
4610 First portion
4612 Second portion
48 Microswitch
4802 Switch body
4804 Plunger
4806A, 4806B, 4806C Connection terminal
50 Button body
5002 Body wall portion
5004 Peripheral wall portion
5006 Flange portion
5010 Letters
5012 Display
52 Coil spring housing portion
54 Support shaft
56 Leg portion
58 Printed circuit board
60 Infrared sensor
62 Indicator LED
64 Bracket
66 Spacer
68 Cable
70A, 70B Leg portion
7002 Screw hole
72 Body plate portion
74 Opening
76 Transparent plate
7602 Base plate portion
7604 Bulging portion
78 Display
80 Female thread member
S1 First space
S2 Second space
N1, N2, N3, N4 Screw

## Claims

1. A flush switch for an aircraft lavatory unit provided at a wall portion of a lavatory of the aircraft lavatory unit, the flush switch comprising:
a first flush switch of a contact type configured to be actuated by a push button; and
a second flush switch of a non-contact type comprising a human body sensor;
the first flush switch and the second flush switch being attached to a single base member and covered with a single cover.

2. The flush switch for an aircraft lavatory unit according to claim 1, wherein
the first flush switch is provided around a half portion of the base member in a horizontal direction, and
the second flush switch is provided around a remaining half portion of the base member.

3. The flush switch for an aircraft lavatory unit according to claim 1 or 2, wherein
the cover comprises a front wall facing the base member and having the push button disposed and a peripheral wall projecting from a periphery of the front wall toward a side of the base member,
a dividing wall is provided at an inner surface of the front wall facing the base member, extends in a direction orthogonal to a direction in which the first flush switch and the second flush switch are arranged, and divides an inside of the cover into a first space in which the first flush switch is housed and a second space in which the second flush switch is housed, and
an end portion of the dividing wall located opposite to the front wall is in contact with the base member.

4. The flush switch for an aircraft lavatory unit according to claim 3, wherein
the dividing wall extends between two of the peripheral walls facing each other, and
the end portion of the dividing wall is in contact with the base member over an entire length thereof.

5. The flush switch for an aircraft lavatory unit according to claim 3, wherein
the human body sensor is an infrared sensor,
the second flush switch comprises a printed circuit board attached to around the remaining half portion of the base member and configured to support the infrared sensor,
a bracket comprising a pair of leg portions standing from sections of the base member across the printed circuit board in a vertical direction and a body plate portion supported by the pair of leg portions and configured to cover the printed circuit board is provided,
an opening is provided at a section of each of the front wall and the body plate portion facing the infrared sensor,
a transparent plate configured to transmit infrared rays toward the inner surface of the front wall and having a contour larger than the opening of the front wall is detachably attached to the opening of the front wall, and
a section around the opening of the body plate portion is in contact with a periphery of the transparent plate located outside the opening of the front wall.

6. The flush switch for an aircraft lavatory unit according to any one of claims 3 to 5, wherein
the first flush switch comprises a microswitch having a plunger,
the push button is disposed at the cover so as to be linearly movable between an initial position and a push-in position in a direction in which the front wall and the base member face each other, and
the first flush switch comprises a coil spring configured to bias the push button to the initial position and a lever swung by linear movement of the push button from the initial position to the push-in position and configured to push the plunger.
